# EUROPEAN PATENT SPECIFICATION

(11) **EP 2 601 412 B1**
(45) Date of publication and mention of the grant of the patent: **02.07.2014**
(21) Application number: 11741441.7
(22) Date of filing: 01.08.2011
(51) Int. Cl.: F04B 35/04, F04B 39/14, F04B 43/00, F04B 43/02, F04B 43/04, F04B 45/04, F04B 45/047, F04B 53/22, H02K 33/16

(54) **PUMP**
PUMPE
POMPE

(30) Priority: 04.08.2010 DE 102010038871
(43) Date of publication of application: 12.06.2013
(73) Proprietor: Gardner Denver Thomas GmbH, 82178 Puchheim (DE)
(72) Inventor: SCHMID, Gunther Erich, 81241 München (DE); SPEAR, Simon, 87724 Ottobeuren (DE); DAVIES, Philip Owain Lloyd, Farnham GU99EP (GB); HERRMANN, Thomas, 81539 München (DE)
(74) Representative: Rau, Schneck & Hübner Patentanwälte Rechtsanwälte PartGmbB
(86) International application number: PCT/EP2011/063239
(87) International publication number: WO 2012/016957

(56) References cited:
- DE-B3-102008 049 900
- US-A- 4 563 603
- US-A- 5 011 379
- US-A- 5 466 133
- US-A- 6 152 704

## Description

The invention relates to a pump, in particular a diaphragm pump, for conveying a fluid. The fluid to be conveyed is taken to mean a medium to be conveyed, such as a liquid, a gas, a gas mixture or a liquid/gas mixture. The pump is preferably used in continuous operation in small sewage plants. Small sewage plants of this type are often used to purify waste water in buildings which do not have their own sewage system connection. The pump is preferably used to introduce air into the waste water. The waste water is thus enriched with oxygen. Bacteria are thus activated for the biological or bacterial purification of the waste water. The pump is therefore preferably an aeration pump.

A large number of pumps are known from the prior art and are used in small sewage plants, for example. The disadvantage in these known pumps is that their wearing parts - such as their diaphragm - often have to be exchanged after a few years. The exchange of the wearing parts is relatively time-consuming. Technical skill is generally necessary to exchange the wearing parts.

DE 10 2008 049 900 B3 discloses a pump having a pump housing and a diaphragm which is housed in the pump housing and limits a pumping chamber. The diaphragm is driveable by a drive mechanism. An exchange of the diaphragm is difficult and time-consuming.

US 6,152,704 discloses a pump having a pump body. The pump body is removably attached to a turbine drive unit. A fixed L-shaped tab and a movable lever arm of the turbine drive unit engage an annular flange of the pump body and secure the pump body in place.

US 5,011,379 discloses a pump having a housing and a vibrator housed in the housing. The vibrator is constituted by a magnet holder and a pair of magnets.

US 4,563,603 discloses a pump having rod holders. The rod holders are fixed to a base and a reciprocating rod carrying an armature. A diaphragm is connected to the reciprocating rod.

The invention is therefore based on the object of providing a pump, the wearing parts of which can be exchanged particularly easily and quickly.

The core of the invention is that the at least one pump body drive mechanism can be locally fixed by the at least one fixing device. In particular, this prevents the fixed pump body drive mechanism being able to unintentionally move or be moved during maintenance work. A simple exchange of a pump body is thus possible, for example.

For example, during maintenance work, it can thus also be prevented that a pump body drive mechanism comprising at least one drive magnet is attracted by at least one stationary drive magnet and is fixed thereto. The release of the magnets is generally very difficult. A pump body drive mechanism of this type preferably has at least a first drive magnet. It is advantageous if the at least one pump body drive device furthermore has at least one second drive magnet arranged adjacent to the at least one pump body drive mechanism to move the at least one pump body drive mechanism along the displacement path. Another configuration of the pump body drive device is alternatively possible.
The at least one pump body may, for example, be configured as a diaphragm. However, it may also be a piston. Two pump bodies are preferably provided. It is also advantageous if two fixing devices are provided. These can preferably be actuated independently of one another. The fixing devices may, however, also be coupled to one another for common actuation.

Preferably, the fixing device can be actuated by at least one actuating device which is pivotably mounted on the pump housing. Preferably, the at least one actuating device comprises at least one actuating means for the actuation thereof.

Further advantageous configurations are disclosed in the sub-claims.

Preferably, the fixing device can be actuated by at least one actuating device, which is actuably mounted, preferably pivotably, on the pump housing, the at least one actuating device preferably comprising at least one actuating means for the actuation thereof. Such configuration allows simple actuation or handling of the fixing device. An actuating device is preferably provided for each fixing device. However, two fixing devices may also be actuated by one actuating device. The actuating device may be displaceably or pivotably mounted on the pump housing. It preferably comprises at least one actuating means. Examples of possible actuating means are an actuating handle or a handle trough. The actuating means may, however, have been produced by knurling. The actuating device may be mounted on the inside or outside of the pump housing. With inside mounting of the actuating device, the actuating means is preferably configured as an actuating handle or lever, which can then project from the pump housing through a recess formed in the pump housing.

Preferably, the fixing device comprises at least one fixing part which can be displaced by the actuating device for fixing the pump body drive mechanism, the at least one fixing part being movable between the release position and the fixing position. Such configuration leads to an extremely functionally reliable fixing of the pump body drive mechanism. The fixing part may engage, preferably positively, in the pump body drive mechanism. The pump body drive mechanism then preferably has at least one corresponding recess or opening for this. The fixing part may, however, also rest on the outside of the pump body drive mechanism. It may rest thereon laterally or on the end face. The fixing part may, however, also partially encompass the pump body drive mechanism in a clamp-like manner. Each fixing device preferably has one or two fixing parts.

Preferably, the fixing part, in its fixing position, fixes the pump body drive mechanism at least in the direction of its displacement path. Such configuration, in a functionally reliable manner, prevents a further displacement of the pump body drive mechanism along its displacement path. The pump body drive mechanism may also be fixed, however, alternatively or additionally, transverse to its displacement path. The at least one fixing part is preferably configured in such a way that, in its fixing position, it fixes the pump body drive mechanism in the direction of its displacement path and preferably also transverse to its displacement path. The fixings acting in different directions can be achieved by common fixing parts or by fixing parts which are separate from one another Preferably, at least one actuable centering part for centering the pump body drive mechanism is provided, wherein the at least one centering part preferably has at least one centering flank for interaction with the pump body drive mechanism. Such configuration allows an extremely precise placing of the pump body drive mechanism. It can thus be guided precisely to its desired fixing position.

Preferably, the centering part centers the pump body drive mechanism in the direction of its displacement path. Preferably, the centering part centers the pump body drive mechanism transversely to its displacement path. Such configurations lead to an extremely precise placing of the pump body drive mechanism.

Preferably, the centering part is connected to the fixing device. Such configuration results in an extremely high functional reliability. Moreover, a pump of this type is extremely easy to handle during maintenance.

Preferably, the fixing device has at least one wedge mechanism, the at least one wedge mechanism having a coupling wedge, which can be actuated by the actuating device, and the fixing part, which interacts with the coupling wedge and is configured in a wedge-like manner, at least one spring element also preferably being provided to move the fixing part into its release position. Such configuration produces an extremely functionally reliable fixing device. The coupling wedge and the fixing part configured in the manner of a wedge have a sliding connection with one another by means of their wedge faces. An actuation of the coupling wedge leads to a movement of the fixing part, whereby a movement deflection takes place. Two wedge mechanisms per fixing device are preferably provided. Each fixing device preferably also has two fixing parts, it being possible for a spring element to be provided between these fixing parts for the movement thereof into their release position. The spring element may be configured as a leaf spring, helical spring, elastomer spring or as a spring block. Instead of spring elements, corresponding guides may also be provided, which bring about a return of the fixing parts. A swallowtail guide may, for example, be used for this. The fixing parts, in the fixing position, preferably rest laterally on the pump body drive mechanism.

Preferably, the fixing device has at least one encompassing body to at least partially encompass the pump body drive mechanism, the at least one encompassing body preferably having at least one encompassing receiver. Such configuration also leads to an extremely reliable fixing of the pump body drive mechanism. The encompassing body, in the fixing position, preferably encompasses the pump body drive mechanism in the region of its longitudinal sides. A positive connection is preferably present between the encompassing body and the pump body drive mechanism.

Preferably, the fixing part and the actuating device are coupled to one another by at least one link arrangement, the at least one link arrangement having at least one link pin and at least one link for guiding the at least one link pin. Such configuration leads to an easy and functionally reliable actuation of the fixing part. The link is preferably configured in or on the actuating device, while the link pin is connected to the fixing part. According to an alternative embodiment, the link is configured on the fixing part, while the link pin is provided on the actuating device.

Preferably, the link has at least one link pin actuating portion for actuating the link pin, the link preferably also having a fixing portion for locally securing the link pin. Such configuration is particularly operationally reliable.

Preferably, the link pin forms the fixing part. Such configuration has an extremely simple structure. The link is then preferably configured as a link cam or control cam. A spring element, which brings the fixing part into contact with the link cam, is preferably associated with each fixing part.

Preferably, the actuating device and the fixing device are rigidly connected to one another, the fixing part preferably being configured as a fixing face for resting on the pump body drive mechanism. Such configuration is again extremely simple with regard to structure. It is also extremely assembly-friendly and functionally reliable.

Preferably, the actuating device comprises at least one resilient spring means, which, in the fixing position of the fixing part, rests on the pump body drive mechanism for holding the actuating device in its fixing position. Such configuration leads to an extremely high operating reliability.

Four embodiments of the invention will be described below by way of example with reference to the accompanying drawings, in which:
- Fig. 1: shows a perspective view of a pump according to the invention in accordance with a first embodiment,
- Fig. 2: shows a section through the pump shown in Fig. 1,
- Fig. 3: shows an exploded view of the pump shown in Fig. 1 and 2,
- Fig. 4: shows a view which shows the actuating device or fixing device of the pump shown in Fig. 1 to 3,
- Fig. 5: shows a section along the section line V-V shown in Fig. 4,
- Fig. 6 and 7: show sections through the pump shown in Fig. 1 to 3, the pump body drive mechanism being released.
- Fig. 8: shows a view of the pump shown in Fig. 1 to 3, the fixing device being located in its centering position,
- Fig. 9: a shows section along the section line IX-IX in Fig. 8,
- Fig. 10 and 11: show sections through the pump shown in Fig. 1 to 3, the fixing device being located in its fixing position,
- Fig. 12: shows a perspective view of a pump according to the invention, in accordance with a second embodiment,
- Fig. 13: shows an exploded view of the pump shown in Fig. 12,
- Fig. 14: shows a perspective view of the fixing devices, the actuating devices and the pump body drive mechanism of the pump shown in Fig. 12 and 13,
- Fig. 15: shows a perspective view of the actuating device of the pump shown in Fig. 12 and 13,
- Fig. 16: shows a view of the pump shown in Fig. 12 and 13, the fixing device being in its release position,
- Fig. 17 and 18: show sections through the pump shown in Fig. 12 and 13, the fixing device being in a centering position,
- Fig. 19: shows a section through the pump shown in Fig. 12 and 13, the fixing device being in its fixing position,
- Fig. 20: shows a perspective view of a pump according to the invention in accordance with a third embodiment,
- Fig. 21: shows a section through the pump shown in Fig. 20,
- Fig. 22: shows a further section through the pump shown in Fig. 20, the pump body drive mechanism being released,
- Fig. 23: shows a perspective view of the actuating device of the pump shown in Fig. 20 to 22,
- Fig. 24: shows a perspective view of the fixing devices and the actuating device of the pump shown in Fig. 20 to 22,
- Fig. 25: shows a section corresponding to Fig. 22, the fixing devices being in their fixing position,
- Fig. 26: shows a perspective view of a pump according to the invention in accordance with a fourth embodiment,
- Fig. 27 and 28: show sections through the pump shown in Fig. 26, the pump body drive mechanism being released,
- Fig. 29: shows a perspective view of the fixing devices shown in Fig. 26 to 28, the actuating devices and the pump body drive mechanism,
- Fig. 30: shows a section through the fixing devices, the actuating devices and the pump body drive mechanism of the pump shown in Fig. 26, the pump body drive mechanism being released,
- Fig. 31: shows a section corresponding to Fig. 30, the fixing devices being in their centering position, and
- Fig. 32: shows a section corresponding to Fig. 30 and 31, the fixing devices being in their fixing position.

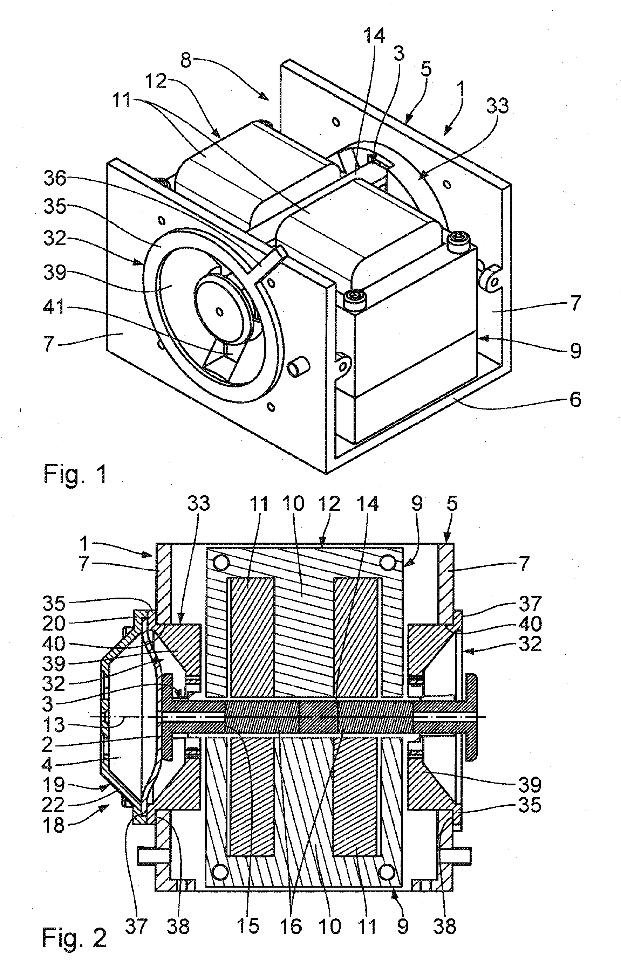

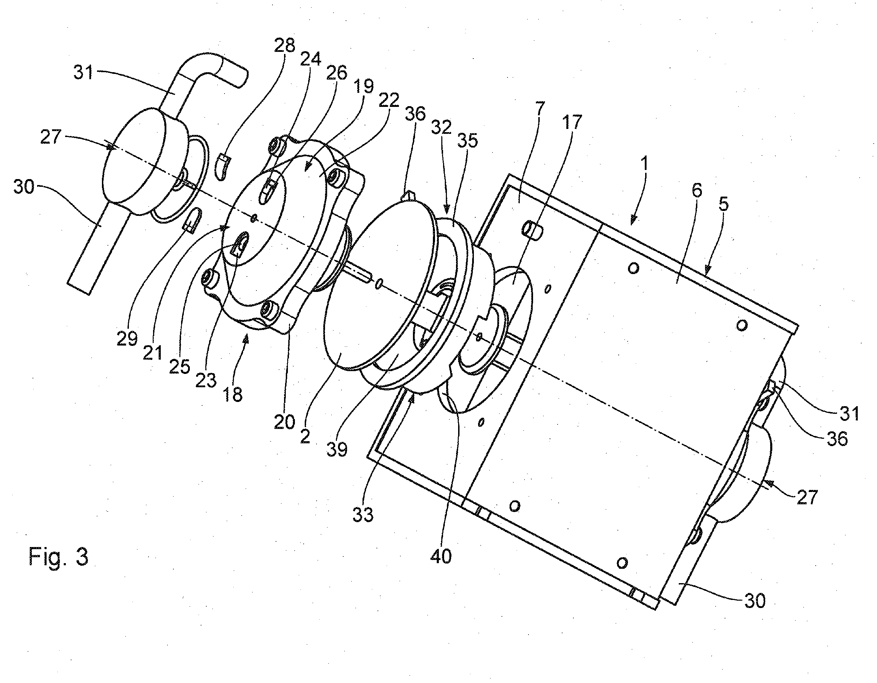

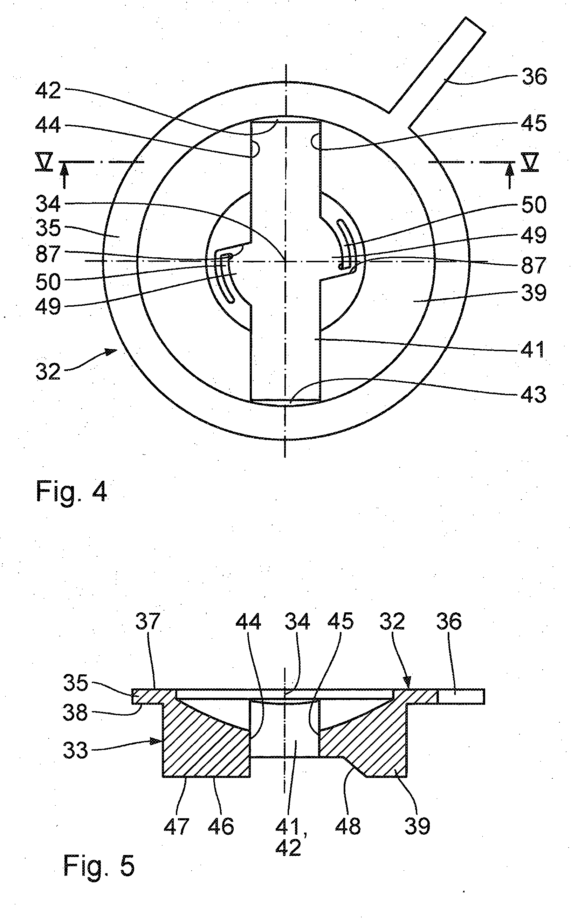

A first embodiment of the invention will be described below with reference to Fig. 1 to 11. A pump according to the first embodiment comprises a pump housing 1, diaphragms 2 and a diaphragm drive mechanism 3 for actuating the diaphragms 2. The diaphragms 2 and the diaphragm drive mechanism 3 are housed in the pump housing 1. The diaphragms 2 and the pump housing 1 together limit pumping chambers 4, which can be changed with regard to their volume. The diaphragms 2 are flexible and impermeable to fluid. By actuating the diaphragms 2 by the diaphragm drive mechanism 3, a fluid is conveyed by changing the volume of the pumping chambers 4. The diaphragms 2 form pump bodies, while the diaphragm drive mechanism 3 is a pump body drive mechanism.

The pump housing 1 comprises a panel 5, which is U-shaped in design. The panel 5 therefore has a U-base 6 and two U-legs 7 projecting perpendicularly from the U-base 6. The open sides of the panel 5 are in each case closed when the pump is assembled. Opposing the U-base 6, a first panel cover (not shown) is provided for this. Furthermore, two second panel covers (not shown) are provided, which then oppose one another and rest laterally on the U-base 6 and the U-legs 7. The panel covers are preferably screwed to the panel 5 by screws. They together form a U-shape, the first panel cover forming the U-base. The U-base 6, the U-legs 7 and the panel covers are plate-shaped in each case. They together limit a cuboid receiving space 8 and together form the pump housing 1.

Provided in the receiving space 8 are two yokes 9, which are arranged spaced apart from one another and are preferably formed from an iron material. The yokes 9 are fastened to the panel 5. They are preferably fixed to the U-base 6. Each yoke 9 is E-shaped and therefore has a central, finger-like projection 10. Wound around each projection 10 is a coil 11, by which electrical current can be carried. The projections 10 in each case form a core for the coils 11 and run toward one another. The yokes 9 and the coils 11 form electric drive magnets 12.

Arranged between the yokes 9 and the associated coils 11 is the diaphragm drive mechanism 3, which is configured as an armature, shuttle or the like. The armature 3 is moveable and plate-like. It has a rectangular, elongate shape and therefore a longitudinal center axis 13. The armature 3 can be axially displaced along its longitudinal center axis 13. It comprises a frame 14 with two window-like openings 15, which are arranged next to one another in the direction of the longitudinal center axis 13. A permanent magnet 16 is inserted in each opening 15. Opposite poles of the permanent magnets 16 are arranged next to one another.

The permanent magnets 16 of the armature 3 are located in a magnetic field, which is produced by the electric drive magnets 12 when the coils 11 are provided with current. By providing the coils 11 with current, the armature 3 is moved axially between the yokes 9. The armature 3 then oscillates along its longitudinal center axis 13. It moves, in this case, alternately in the direction of the mutually opposing U-legs 7.

The diaphragms 2 are fastened to the mutually opposing longitudinal ends of the armature 3. The centers of the diaphragms 2 are in this case fixed to the armature 3. For this purpose, compression discs may be provided on the armature 3 and rest on the inside of the diaphragms 2. On the outside, fixing discs rest on the diaphragms 2 and are screwed to the associated compression discs.

Configured in each U-leg 7 is an opening 17 which completely passes through the U-leg 7. The openings 17 are circular and oppose one another. Their center point is located on the longitudinal center axis 13 of the armature 3 when the pump is assembled.

A pump head 18, which is a component of the pump housing 1, is associated with each opening 17. Each pump head 18 comprises a chamber part 19, which is configured in a shell-like manner and is held by screws on the outside on the respective U-leg 7. The pump heads 18, when the pump is assembled, oppose one another. The chamber part 19 in turn has a diaphragm clamping region 20, which runs round the respective opening 17 and rests closely on the outside of the respective U-leg 7. Furthermore, each chamber part 19 has a valve receiving region 21, which is arranged spaced apart from the respective U-leg 7 with the formation of the respective pumping chamber 4. Each chamber part 19 furthermore has a peripheral wall 22, which connects the diaphragm clamping region 20 and the valve receiving region 21 to one another. The chamber part 19 tapers from the diaphragm clamping region 20 in the direction of the valve receiving region 21.

A pressure valve receiver 23 and a suction valve receiver 24 are formed in each valve receiving region 21. The pressure valve receiver 23 is arranged adjacent to a pressure opening 25, while the suction valve receiver 24 is placed adjacent to a suction opening 26. The pressure opening 25 and the suction opening 26 are in each case arranged in the valve receiving region 21 and pass through it completely.

Furthermore, each pump head 18 comprises a valve cover 27, which is placed tightly onto the outside of the respective chamber part 19 and adjoins the valve receiving region 21. The valve cover 27 is screwed to the respective chamber part 19. In this case, the valve cover 27 holds a suction valve plate 28 in the suction valve receiver 24. The suction valve plate 28 can close the suction opening 26. Moreover, the valve cover 27 holds a pressure valve plate 29 in the pressure valve receiver 23. The pressure valve plate 29 can close the pressure opening 25. The valve plates 28, 29 can be moved between a closing position, in which the opening 26 or 25 is released. They are pressure-controlled. Each valve cover 27 moreover has a pressure line 30 and a suction line 31. The pressure lines 30 have a flow connection with the pressure openings 25, while the suction lines 31 have a flow connection to the suction openings 26.

The pump furthermore comprises two actuating devices 32. Each actuating device 32 is non-rotatably connected to a fixing device 33. The actuating devices 32 and the associated fixing devices 33 are in each case preferably configured in one piece. They form actuating/fixing units. The actuating/fixing units are cylinder-like in design. They each have a center axis 34. The actuating/fixing units oppose one another when the pump is assembled.

Each actuating device 32 comprises an annular contact web 35 and an actuating handle 36 projecting radially from the contact web 35. The contact webs 35 in each case have an outer face 37 and an inner face 38 opposing the outer face 37. The external diameter of the contact webs 35 is larger than the diameter of the openings 17. When the pump is assembled, the inner faces 38 rest adjacent to the openings 17 on the U-legs 7 on the outside. The inner faces 38 of the actuating devices 32 face one another here. The diaphragms 2 rest on the outer faces 37 of the actuating devices 32. They are held there by the chamber parts 19, which are screwed to the pump housing 1 or to the respective U-leg 7.

Alternatively, the contact webs 35 may rest on the U-legs 7 on the inside.

Each fixing device 33 comprises a base body 39, which adjoins the inner face 38 of the respective contact web 35. The base bodies 39 in each case have an external diameter, which is slightly smaller than the diameter of the openings 17. When the pump is assembled, the base bodies 39 project through the openings 17 into the receiving space 8 and rest on the limit wall 40 which limits the respective opening 17 and then forms a bearing face.

Each base body 39 is point-symmetrical with respect to its center of symmetry and has an elongate, rectangular, window-like opening 41, which completely axially passes through the latter and goes through the center axis 34. Each opening 41 has a first longitudinal end 42 and a second longitudinal end 43, which opposes the first longitudinal end 42. The longitudinal ends 42, 43 substantially run adjacent to the contact web 35. The openings 41 furthermore in each case have two mutually opposing longitudinal sides 44, 45. The openings 41 divide the base body 39 substantially into two halves. The spacing of the longitudinal sides 44, 45 with respect to one another is slightly larger than the width of the armature 3. The spacing of the longitudinal ends 42, 43 with respect to one another is slightly larger than the height of the armature 3.

Each base body 39 has an inside 46, which, when the pump is assembled, projects into the receiving space 8 and is remote from the associated contact web 35. Each base body 39, on the inside 46, has a contact face 47, which runs parallel to the contact web 35 and forms a fixing part for the axial fixing of the armature 3.

Two centering flanks 48, which adjoin the longitudinal side 44 or 45 of the respective opening 41, are also provided on each base body 39 on the inside 46 thereof. The centering flanks 48 issue from the contact face 47 of the respective base body 39. They run obliquely to the contact base 47. A centering flank 48 is located adjacent to the first longitudinal end 42 and the second longitudinal side 45. The other centering flank 48, on the other hand, is arranged adjacent to the second longitudinal end 43 and the first longitudinal side 44. The centering flanks 48 run from the contact face 47 in the direction of the center axis 34. They oppose one another obliquely.

Furthermore, two opening bulges 49 adjoin each opening 41 and are provided in the region of the center axis 34 in the base body 39. A spring arm, which is connected to the respective base body 39, springs into each opening bulge 49. The spring arms 50 are arcuate. They extend in a curved manner around the center axis 34. They can be radially deflected.

The opening bulges 49 are, in each case, laterally limited by inner contact flanks 87, which are provided on the base body 39 and extend adjacent to the free ends of the spring arms 50. The contact flanks 87 extend parallel to one another. Each contact flank 87 borders on a longitudinal side 44 or 45 of the respective opening 41 and extends in the base body over a thick region thereof. The contact flanks 87 extend perpendicular to the contact faces 47.

The function of the pump will be described below. By providing the coils 11 with current, the latter produce a magnetic field. The armature 3, which comprises the permanent magnets 16, is located in the magnetic field. The permanent magnets 16 also produce a magnetic field. The permanent magnets 16 and the electric drive magnets 12 together form a pump body drive device or a diaphragm drive device. The armature 3 is provided with an oscillating movement by the magnetic fields along its longitudinal center axis 13. In the process, it is displaced along a displacement path. The armature 3 moves in two different directions, which, are opposed or in opposite directions to one another.

Owing to the oscillating movement of the armature 3, two diaphragms 2 are actuated alternately. The centers of the diaphragms 2 are alternately pressed into the chamber parts 19 and then drawn into the receiving space 8, so a fluid to be conveyed is conveyed.

The fluid to be conveyed is sucked via at least one panel cover into the pump housing 1 by the diaphragms 2. In the pump housing 1, the fluid flows via at least one part region along the yokes 9. It is then drawn into the suction lines 31. Via the suction openings 26, which form fluid inlets, the fluid arrives in the respective pumping chamber 4. The fluid, in the process, passes the respective suction valve plate 28, which is then located in its release position. The pressure openings 25 are, in this case, closed by the pressure valve plates 29. The fluid then leaves the pumping chambers 4 via the pressure openings 25, which form fluid outlets. The suction valve plates 28 prevent an unintentional return of the fluid into the suction lines 31. The fluid passes the respective pressure valve plate 29, which is then in its release position. It then arrives in the pressure lines 30. The fluid can then be removed via a collecting pressure connecting piece (not shown). The pump can be completely housed in an outer housing.

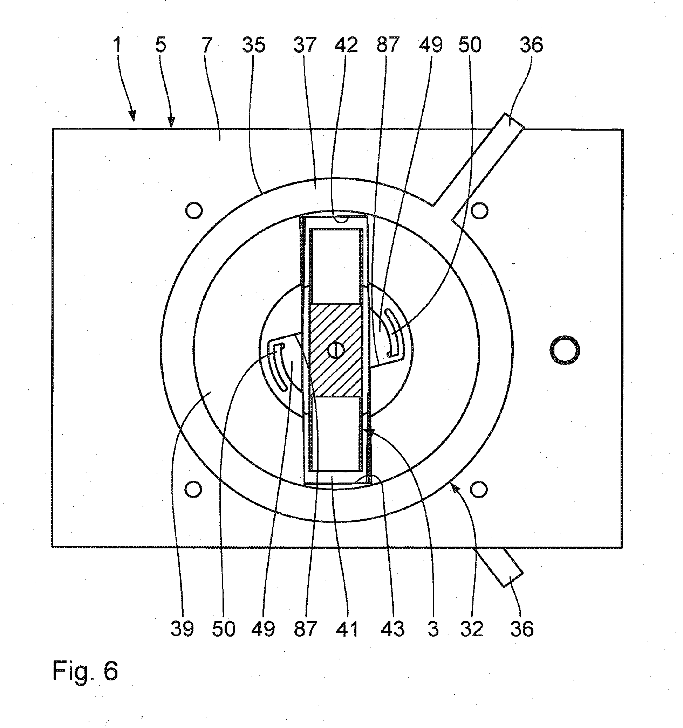

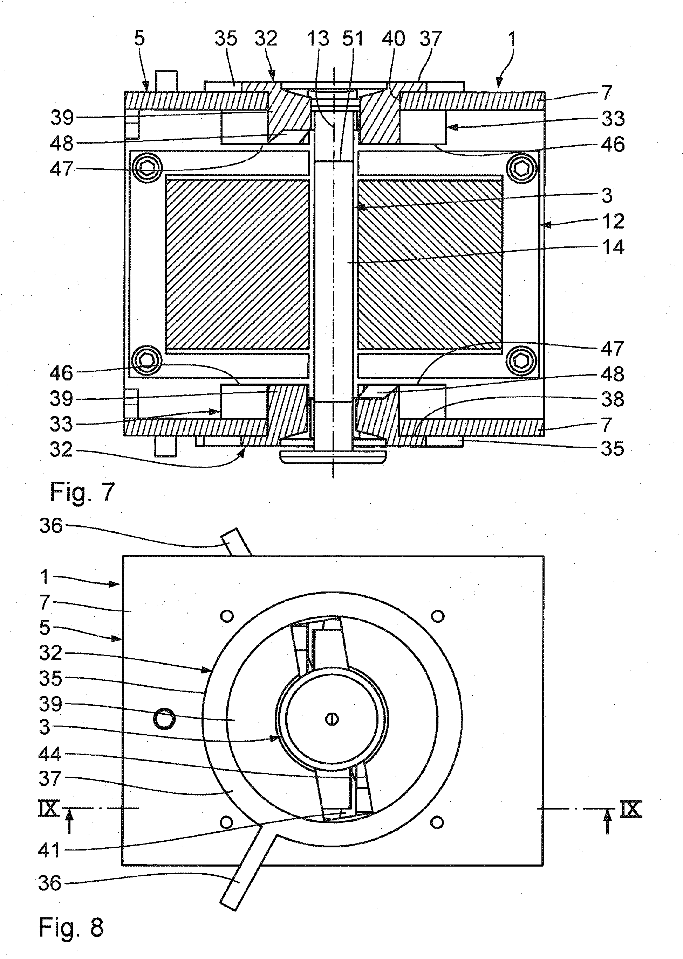

The exchange of a diaphragm 2 will be described in more detail below. In this case, the operating state of the pump is assumed, which is shown in Fig. 6 and 7. The armature 3 is not driven during the diaphragm exchange. The coils 11 are without current.

In this operating state of the pump, the armature 3 is moveable along its displacement path. The actuating devices 32 or the fixing devices 33 are in each case in their release position or non-fixing position. The openings 41 are oriented in such a way that the armature 3 can pass through them. The openings 41 and the armature 3 have a common center plane.

The actuating devices 32 are to be manually pivoted from their release position about the center axis 34 into their fixing position. The actuating devices 32 can be pivoted simultaneously or consecutively. The actuating handles 36, which allow a simple and reliable force transmission, are to be used for the manual pivoting of the actuating devices 32. The pivoting of the actuating devices 32 leads to a corresponding pivoting of the fixing devices 33 about the center axis 34 from their release position into their fixing position.

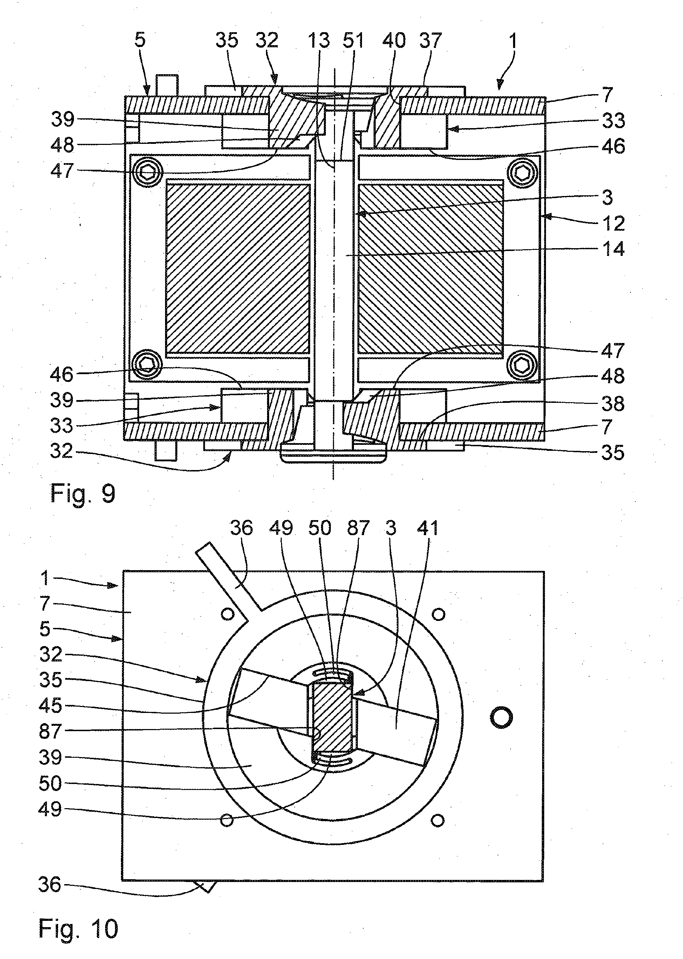

A centering of the armature 3 firstly takes place. This centering is shown in Fig. 8 and 9. It takes place automatically during the displacement of the fixing devices 33 from their release position into their fixing position. The fixing devices 33 thus also ensure a centering. The two centering flanks 48 of a fixing device 33 come to rest synchronously on the armature 3. The armature 3 preferably has corresponding engagement faces 51 for the centering flanks 48. The engagement faces 51 are located in the region of the longitudinal ends of the armature 3 and are substantially perpendicular to the longitudinal center axis 13. A relative movement takes place between the engagement faces 51 and the associated centering flanks 48. Because of the inclined course of the centering flanks 48, the armature 3 is displaced from the actuating device 32 which has just been actuated along the longitudinal center axis 13 in the direction of the other actuating device 32. By actuating the two actuating devices 32, a centering of the armature 3 takes place in the direction of the longitudinal center axis 13. Each fixing device 33 presses the armature 3 away from it, which leads to a centering of the armature 3. The armature 3, after centering, is located centrally between the U-legs. Furthermore, the centering flanks 48, during a centering of the armature 3, also act in a direction which is perpendicular to the longitudinal center axis 13. The armature 3 is thus also radially centerd with respect to the longitudinal center axis 13. The further the actuating devices 32 or the fixing devices 33 are pivoted into the fixing positions, the further the armature 3 is displaced with respect to its position.

The diaphragms 2 fastened to the armature 3 prevent a pivoting of the armature 3 about the longitudinal center axis 13 on actuation of the fixing devices 33. The centering flanks 48 furthermore prevent the armature 3 from carrying out a pivoting movement about the longitudinal center axis 13 upon actuation of the fixing devices 33.

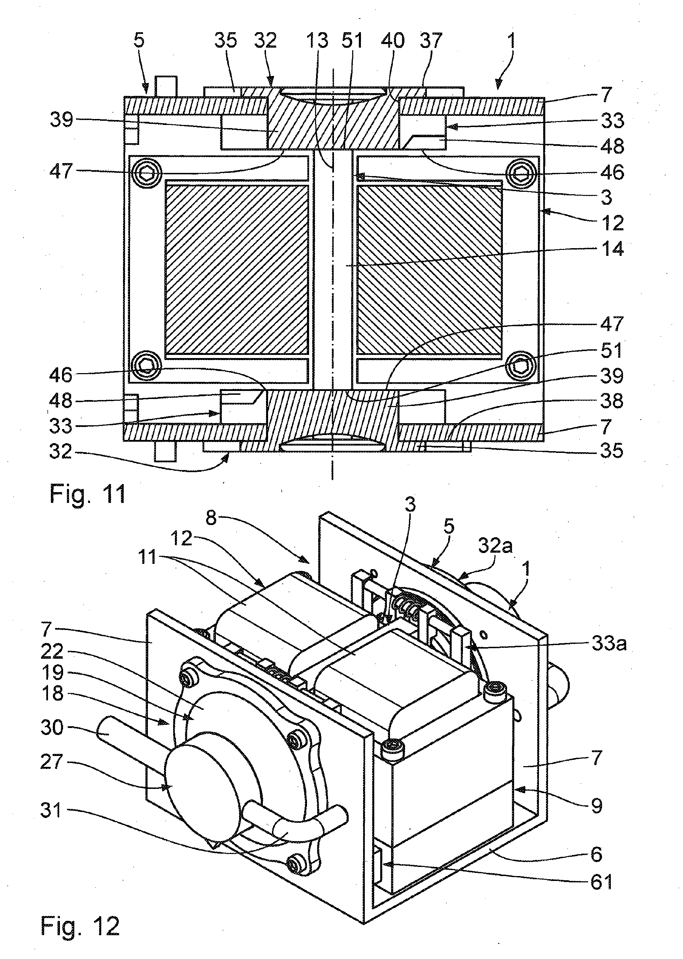

The fixing devices 33 then reach their fixing positions. These are shown in Fig. 10 and 11. The contact faces 47 then rest flat on the longitudinal ends of the armature 3 and thus secure these axially. The openings 41 and the armature 3 are no longer oriented one after the other or with respect to one another. The armature 3 can no longer pass through the openings 41. The spring arms 50 prevent the fixing devices 33 being able to be moved unintentionally from their fixing position. They furthermore also fix the armature 3. The spring arms 50, in this case, rest on the armature 3. The diaphragms 2 can then be removed from the armature 3. The pump heads 18 are to be removed for this purpose.

Furthermore, the contact flanks 87 of a base body 39 then rest laterally on the armature 3 on the opposing sides of the armature 3. The contact flanks 87 of the two base bodies 39 are, in this case, spaced apart in the axial direction along the longitudinal center axis 13. The contact flanks 87 prevent both a rotation of the armature 3 about the longitudinal center axis 13 and also prevent the latter approaching the coils 11. The contact flanks 87 therefore form fixing parts, which fix the armature 3 transverse to its displacement path.

With a reverse actuation of the actuating devices 32, the armature 3 is released again.

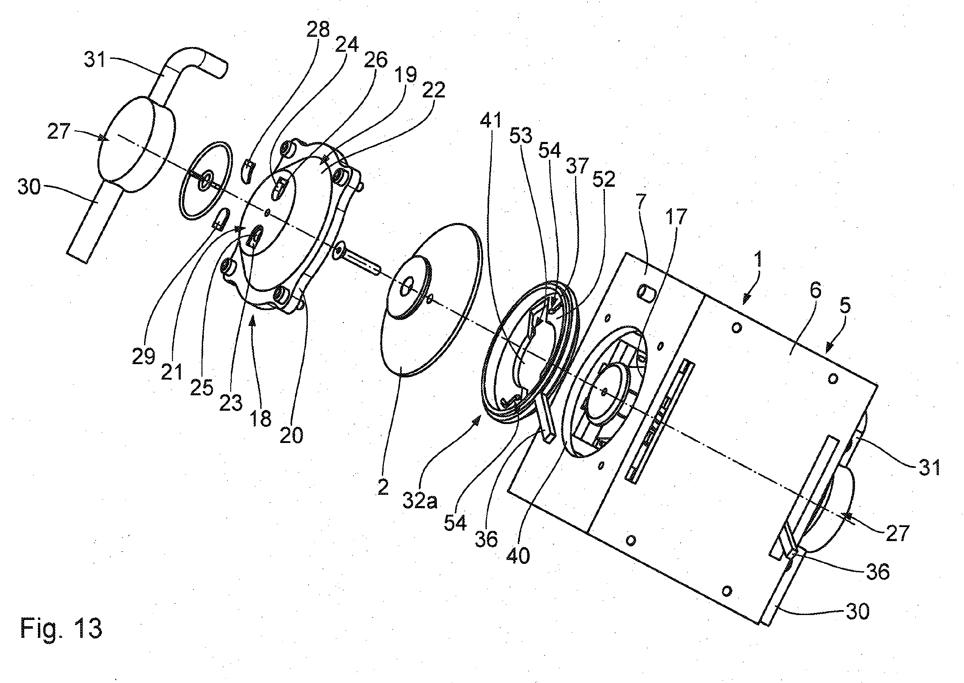

With reference to Fig. 12 to 19, the second embodiment of the invention will be described below. Identical components receive the same reference numerals as in the first embodiment, to which reference is hereby made. Structurally different, but functionally similar components receive the same reference numerals with an "a" thereafter. The essential difference between the first embodiment and the second embodiment is the configuration of the actuating devices 32a and the fixing devices 33a. The actuating devices 32a and the fixing devices 33a are configured separately here.

The pump has two actuating devices 32a. Each actuating device 32a has an actuating disc 52, which is circular and is housed in the receiving space 8. The actuating handle 36 projects radially from the actuating disc 52. The openings 41 axially pass through the actuating discs 52, which are point-symmetrical. Each actuating disc 52 has an outer face 37 and an inner face 38. Two centering webs 53 each with a centering flank 48a project from each inner face 38. The centering webs 53 extend curved in an arcuate manner. They each have uniform curvature and extend at a constant spacing from the center axis 34. Each centering web 53 borders on a longitudinal side 44 or 45 of an opening 41. The centering webs 53 of an actuating device 32a are, in this case, arranged obliquely opposing one another adjacent to the longitudinal ends 42, 43. The centering flanks 48a extend obliquely to the inner face 38 and to the center axis 34.

Furthermore provided in each actuating disc 52 are two links 54, which issue from the inner face 38 thereof. The links 54 may be groove-like. They can, however, also completely pass through the actuating discs 52. The links 54 of an actuating device 32a are arranged adjacent to the longitudinal sides 44 or 45. They oppose one another obliquely. Each link 54 has a radially outer idling portion 55, a link pin actuating portion 56 adjoining the idling portion 55 and a radially inner fixing portion 57 adjoining the link pin actuating portion 56. The fixing portions 57 are in each case arranged adjacent to the openings 41. They run substantially straight. Their spacing from the center axis 34 is substantially constant. Proceeding from the fixing portions 57, the spacing in the link pin actuating portions 56 from the center axis 34 increases greatly. The idling portions 55 again have a substantially constant spacing from the center axis 34.

The pump furthermore has two fixing devices 33a. Each fixing device 33a in turn comprises two wedge mechanisms 58. Each wedge mechanism 58 has an outer coupling wedge 59 and an inner gripping wedge 60. A gripping wedge 60 is in each case associated with a coupling wedge 59. These virtually form a wedge pair.

Each wedge mechanism 58 has a carrier 61. The carriers 61 in each case comprise a fixing piece 62, which, when the pump is assembled, has a screw 63 passing through it and is located adjacent to the U-base 6. The screws 63 are screwed into the yokes 9, so the carriers 61 are also fixed to the yokes 9 thereby. Different securing is alternatively possible.

Furthermore, each carrier 61 has a holder 64, which is preferably configured in a rod-like manner and is connected to a fixing piece 62. The holders 64 of a fixing device 33a run parallel to one another. They extend parallel to the U-legs 7 and run away from the fixing pieces 62 perpendicular to the U-base 6. A coupling wedge 59 is fastened to each holder 64. Each coupling wedge 59 has an obliquely running, free wedge face 65, which is remote from the associated holder 64. The wedge faces 65 of a fixing device 33a face one another. A link pin 71 is provided on each coupling wedge 59 and engages in the link 54 of the adjacent actuating device 32a.

The two holders 64 of a fixing device 33a are connected to one another by two guide rods 66. The guide rods 66 extend parallel to one another and substantially perpendicular to the holders 64. They run parallel to the U-base 6 and to the U-legs 7. They are fastened to the holders 64 in the region of the mutually opposing longitudinal ends of the holders 64. The guide rods 66 extend at a spacing from the longitudinal sides of the armature 3.

The gripping wedges 60 are displaceably guided along the guide rods 66. They have corresponding guide recesses 67 for this. Each gripping wedge 60 has an obliquely running wedge face 68, which rests on the wedge face 65 of an associated coupling wedge 59. Furthermore, each gripping wedge 60 has a free, straight gripping face 47a, which is arranged opposing the wedge face 68. The wedge faces 47a form fixing parts to fix the armature 3. The gripping faces 47a of a fixing device 33a face one another. At least one spring element 70 is provided between the two gripping wedges 60 of a fixing device 33a. A pressure helical spring, which forms the spring element 70, is arranged here on each guide rod 66. However, instead of helical pressure springs 70, leaf springs are preferably provided. The helical pressure springs 70 are supported on the gripping faces 47a of the gripping wedges 60 of a fixing device 33a. The spring elements 70, when using, for example, guiding T-grooves on the sliding wedge faces 65 of the coupling wedges 59, can also be completely dispensed with.

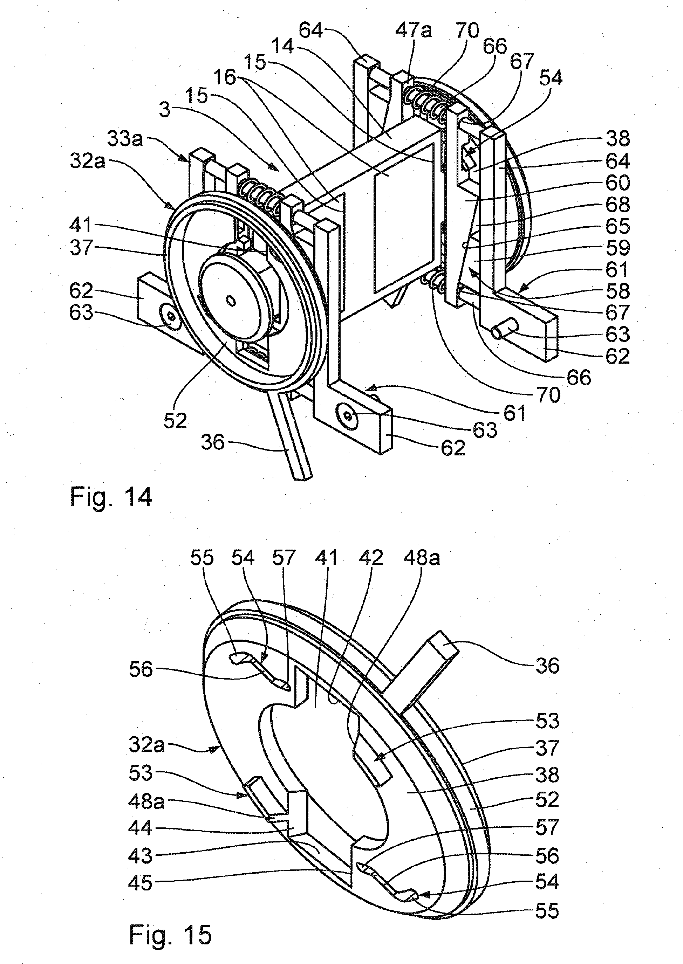

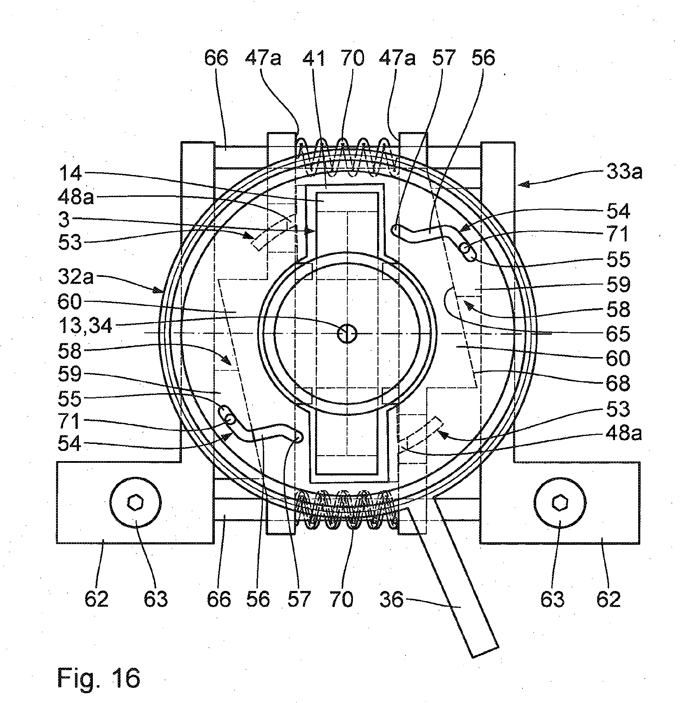

The mode of functioning of the actuating devices 32a or the fixing devices 33a will be described below. In this case, the release position of the actuating devices 32a or the fixing devices 33a is assumed, which is shown in Fig. 14 and 16. The gripping faces 47a of the wedge mechanisms 58 are spaced apart from one another there. The spacing of the gripping faces 47a from one another is larger than the width of the armature 3. The armature 3 can move along the longitudinal center axis 13. The armature 3 may pass through the openings 41.

At least one actuating device 32a or fixing device 33a has to be actuated to fix the armature 3. The actuating handle 36 is preferably to be used for this. During an initial pivoting of an actuating device 32a, the centering flanks 48a synchronously come to rest on the adjacent longitudinal end of the armature 3, so the armature 3 is displaced along its longitudinal center axis 13. The armature 3 is pressed in the direction of the other actuating device 32a. The idling portion 55, in this case, moves past the respective link pin 71. No forces are transmitted between the respective link pin 71 and the links 54. The idling portions 55 thus have no actuating function. The fixing device 33a is not yet actuated.

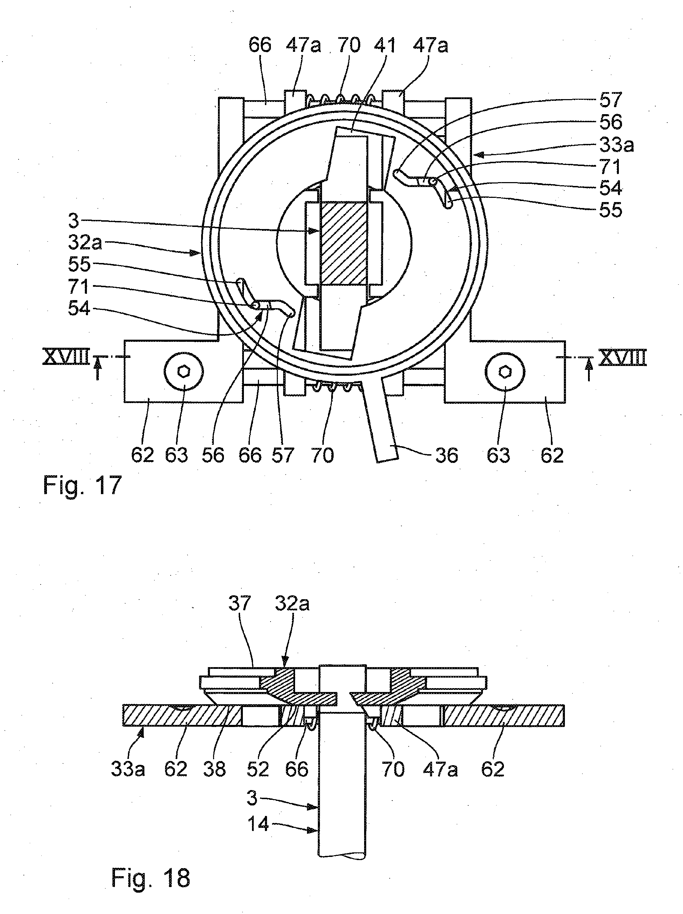

On a further pivoting of the actuating device 32a, the link pin actuating portions 56 arrive at the respective link pin 71. This is shown in Fig. 17 and 18. A force transmission takes place here between the link pin actuating portions 56 and the link pins 71. In this case, a relative movement takes place between the mutually abutting wedge faces 65, 68. The gripping faces 47a therefore approach one another. They also approach the armature 3, which has already been centerd and is now located between the gripping faces 47a of the fixing devices 33a. When guiding the gripping faces 47a of a fixing device 33a together, the spring elements 70 are compressed.

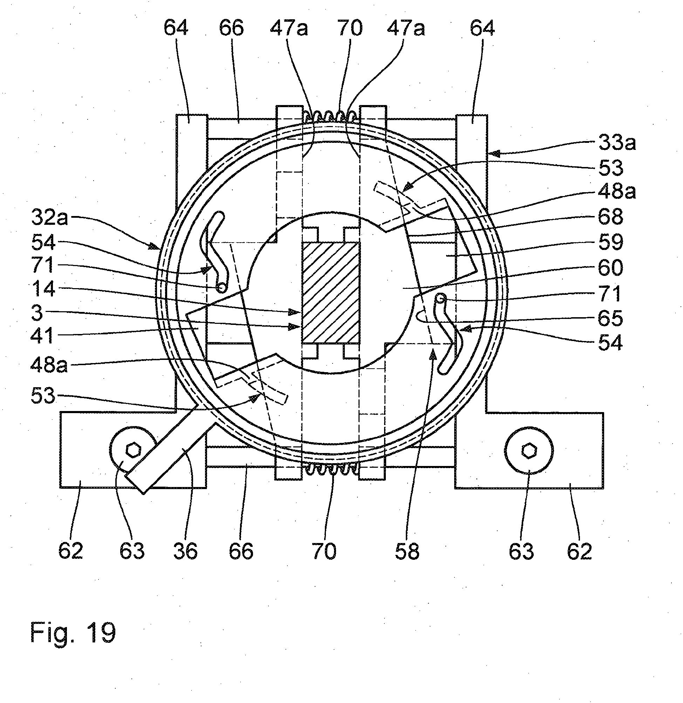

The final fixed position is shown in Fig. 19. The gripping faces 47a of a fixing device 33a rest laterally in a planar manner on the armature 3 and oppose one another. They thus secure the armature 3 locally. It is also centerd in the process. A clamping fixing is present here. The link pins 71 are in the fixing portions 57. They are fixed there. The fixing devices 33a ensure a fixing of the armature 3 at two points which are spaced apart from one another along the longitudinal center axis 13. A front and a rear fixing virtually takes place.

With a reverse actuation of the actuating devices 32a, the armature 3 is released again in an analogous manner.

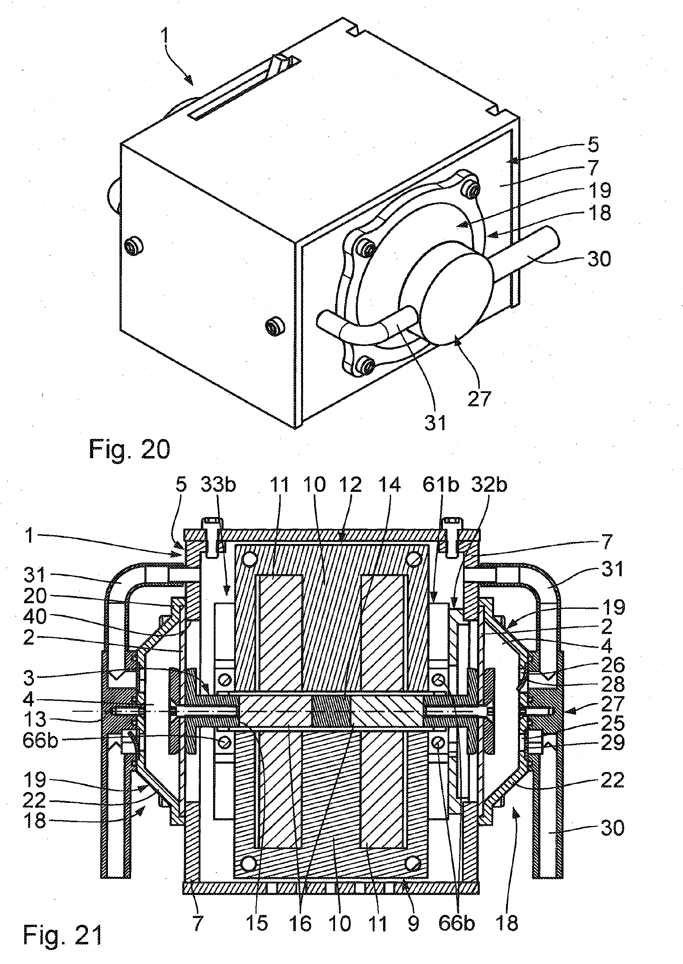

A third embodiment of the invention will be described below with reference to Fig. 20 to 25. Identical components receive the same reference numerals as in the previous embodiments, to which reference is hereby made. Structurally different but functionally similar components receive the same reference numerals with a "b" thereafter. Compared to the two previous embodiments, the actuating devices 32b and the fixing devices 33b are configured differently. The actuating devices 32b are similar to the actuating devices 32a according to the second embodiment.

The pump has precisely one actuating device 32b. Alternatively, however, two actuating devices 32b may also be provided again. The actuating device 32b again has a circular actuating disc 52b, which is again point-symmetrical with respect to its center axis 34. An actuating handle 36 projects radially from the actuating disc 52b. The actuating disc 52b has an opening 41 passing through it on the end face. Furthermore, two links 54b, are provided in the actuating disc 52b, which issue from the inner face 38 thereof. The links 54b may be groove-like. However, they may also completely pass through the actuating disc 52b. The links 54b extend in a curved manner around the center axis 34.

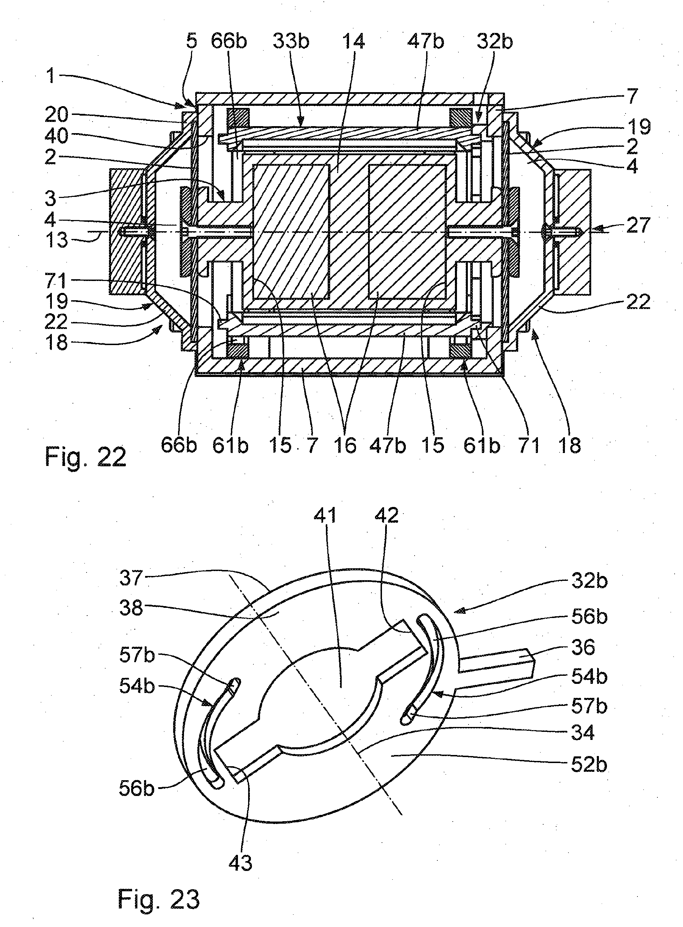

Each link 54b has a link pin actuating portion 56b and a radially inner fixing portion 57b. The link pin actuating portions 56b start in the region of the longitudinal ends 42 or 43 of the opening 41. They extend according to Fig. 23 from the opening 41 clockwise and in the process approach the center axis 34. The link pin actuating portions 56b, in the region adjacent to the longitudinal ends 42, 43, have a first radius of curvature, which is larger than a second radius of curvature, which is present at the inner end of the link pin actuating portions 56b. Adjoining the inner end of the link pin actuating portions 56b are the fixing portions 57b, which run straight and have substantially a constant spacing from the center axis 34.

The pump has two fixing devices 33b. Each fixing device 33b has a carrier 61b, which is fastened by a fixing piece 62b to the adjacent yoke 9. At least one guide rod 66b is fastened to each fixing piece 62b. Two guide rods 66b are provided here per fixing piece 62b and run parallel to one another. The guide rods 66b extend parallel to the U-legs 7 and substantially perpendicular to the U-base 6.

Two clamp-like, elongate fixing parts 47b are displaceably guided on the guide rods 66b. The fixing parts 47b are configured identically. Each fixing part 47b has two guide recesses 67b, which have the guide rods 66b passing through them. The fixing parts 47b in each case have an elongate groove-like or channel-like encompassing receiver 75. The encompassing receivers 75 have introduction openings 72, which oppose one another.

Each encompassing receiver 75 has two longitudinal sides and two longitudinal ends 76. Provided on each longitudinal end 76 is a centering flank 48b, which is configured as an oblique face and axially limits the encompassing receiver 75. A centering flank 73, which is configured as an oblique face and laterally limits the encompassing receiver 75, is provided on each longitudinal side. The centering flanks 48b oppose one another. The length of the encompassing receivers 75 reduces from the outside to the inside in the region of the centering flanks 48b. The centering flanks 73 oppose one another. The width of the encompassing receivers 75 reduces from the outside to the inside in the region of the centering flanks 73.

Furthermore, an axially projecting link pin 71 is provided on each longitudinal end 76 of a fixing part 47b. When the pump is assembled, the link pins 71 engage in the links 54b.

The mode of functioning of the pump will be described in more detail below. In this case, the operating position shown in Fig. 22 is assumed. The fixing parts 47b are located there spaced apart from the armature 3, so the latter is released and can move along its longitudinal center axis 13.

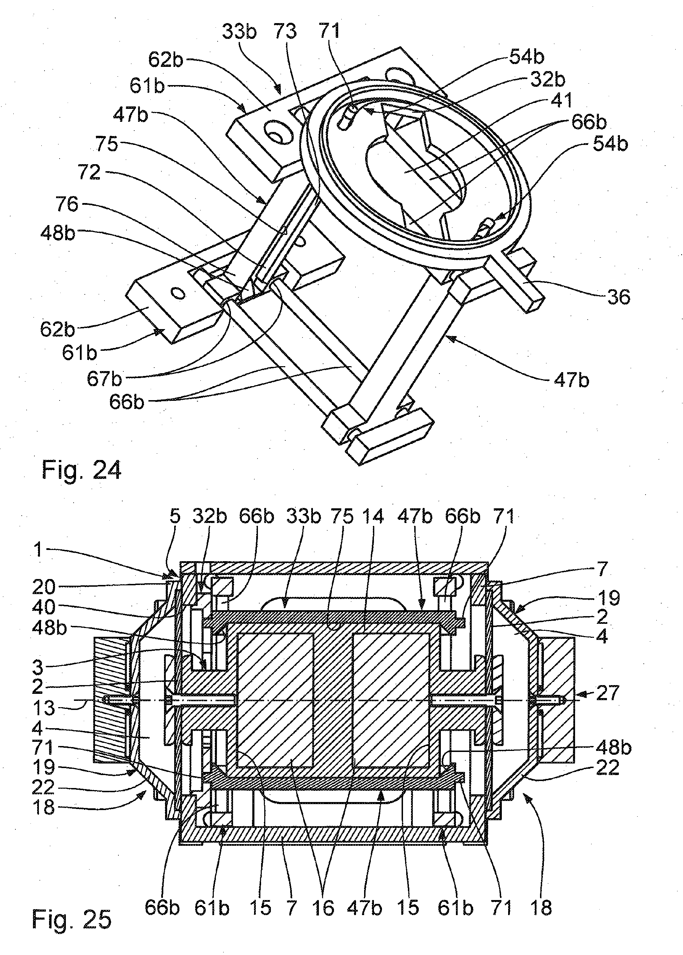

To change a diaphragm 2, the actuating device 32b has to be pivoted by its actuating handle 36 about the center axis 34. In this case, the links 54b are also moved accordingly. A relative movement takes place between the links 54b and the link pins 71. The link pins 71 move along the link pin actuating portions 56b in the direction of the fixing portions 57b. In this case, the fixing parts 47b are actuated and moved toward one another along the guide rods 66b, which is brought about by the link coupling. In the fixing position, which is shown in Fig. 25, the fixing parts 47b and the armature 3 are engaged. The two longitudinal sides of the armature 3 are located in the encompassing receivers 75. In the fixing position, the link pins 71 are locally secured in the fixing portions 57b. The fixing devices 33b ensure fixing of the armature 3 at two points, which are spaced apart from one another along the longitudinal center axis 13. A front and a rear fixing virtually takes place.

When the fixing parts 47b approach the armature 3, the centering flanks 48b bring about a centering of the armature 3 along the longitudinal center axis 13. Furthermore, the centering flanks 73 bring about a centering of the armature 3 transversely to its longitudinal center axis 13.

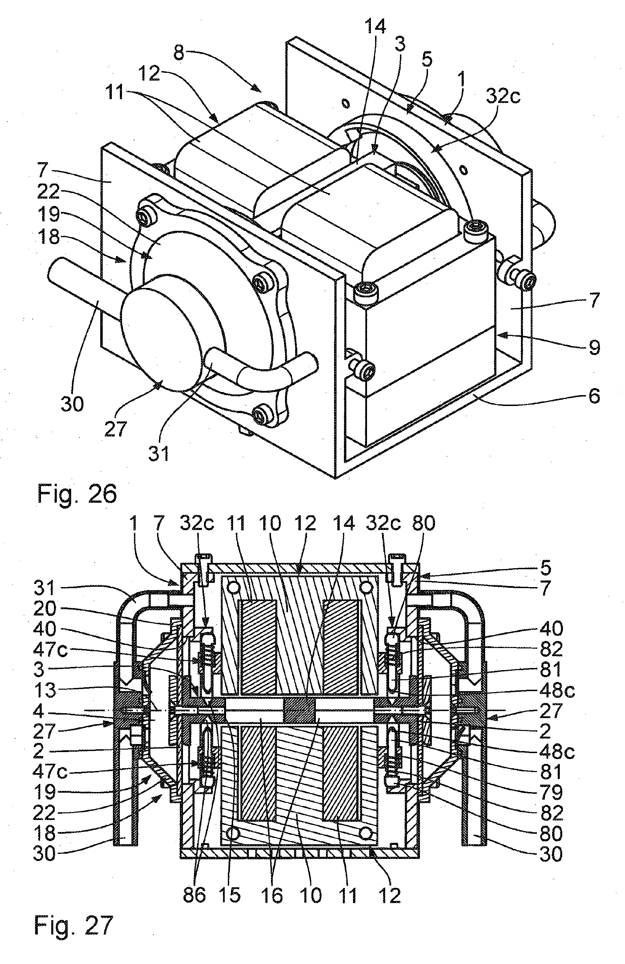

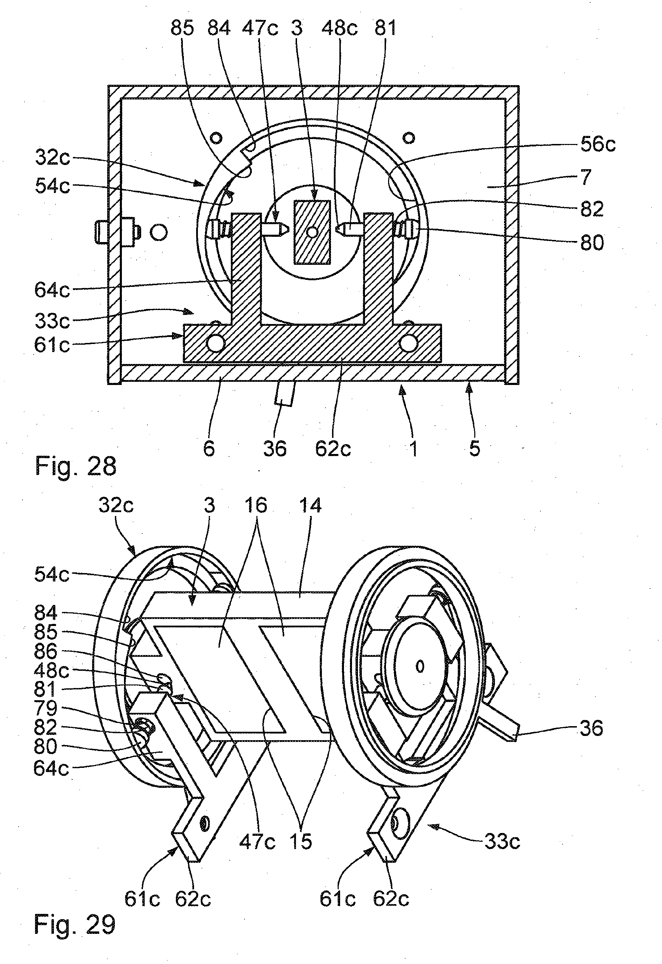

A fourth embodiment of the invention will be described below with reference to Fig. 26 to 32. Identical components received the same reference numerals as the previous embodiments, to which reference is hereby made. Structurally different, but functionally similar components receive the same reference numerals with a "c" thereafter. Compared to the two previous embodiments, the actuating devices 32c and the fixing devices 33c are configured differently.

The pump comprises two actuating devices 32c and two fixing devices 33c. Two fixing pieces 62c are provided here, which are fastened, when the pump is assembled, adjacent to the U-base 6 on the yokes 9. Two mutually parallel holders 64c are rigidly connected to each fixing piece 62c and run away from the U-base 6 and in each case have a bearing opening 79 at their free end. The holders 64c extend perpendicularly to the U-base 6. The bearing openings 79 of a fixing device 33c have a common bearing axis, which runs parallel to the U-base 6. A fixing part 47c is displaceably guided parallel to the U-base 6 in each bearing opening 79. The fixing parts 47c are in each case configured in a pin-like or bolt-like manner, with them preferably being circular in cross section. They in each case have an outer actuating end 80 and an inner fixing end 81 opposing the actuating end 80. The fixing parts 47c taper conically in the region of their fixing ends 81 with the formation of centering parts 48c. In the region of the actuating ends 80, the fixing parts 47c in each case have a radially projecting head. A helical spring 82 is arranged on each fixing part 47c. The latter in each case rests on the head of the fixing part 47c and on the respective holder 64c and presses the fixing part 47c outwardly or away from the respective holder 64c.

The actuating devices 32c are in each case annular. They in each case have a radially projecting actuating handle 36. Two control cams 54c, which are identically configured and run at the edge on the respective actuating device 32c around the center axis 34, are provided in each actuating device 32c. The control cams 54c are open toward the center axis 34. Each control cam 54c has a control cam beginning 84 and a control cam end 85. The radial spacing of the base face limiting the control cams 54c from the center axis 34 in each decrease from the control cam beginning 84 with the formation of a link pin actuating portion 56c in the direction of the control cam end 85. The decrease can take place regularly or irregularly.

Fixing recesses 86 are configured in the armature 3. Provided in the region of each longitudinal end of the armature 3 are two fixing recesses 86, which oppose one another and have a center axis extending parallel to the U-base 6. The fixing recesses 86 are conically configured and are open toward the adjacent fixing parts 47c. The fixing recesses 86 taper from the outside to the inside.

When the pump is assembled, the heads of the fixing parts 47c rest on the inside of the control cams 54c. The heads are pressed by the helical springs 82 onto the control cams 54c. The fixing ends 81 of the fixing parts 47c of a fixing device 33c face one another. The fixing parts 47c form link pins 71 c.

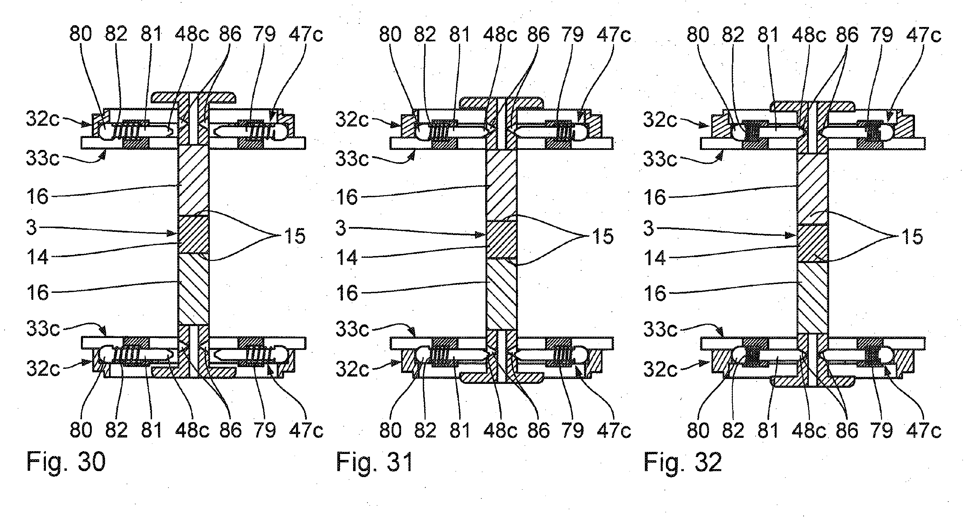

The mode of functioning of the pump will be described in more detail below. The starting point is Fig. 30 in this case. According to Fig. 30, the armature 3 is released. The fixing ends 81 are spaced apart from the fixing recesses 86. During a pivoting of the actuating devices 32c, the actuating ends 80 slide on the control cams 54c. In this case, the fixing parts 47c are pressed toward one another or in the direction of the armature 3 by the control cams 54c in the link pin actuating portions 56c.

As emerges from Fig. 31, owing to the conical configuration of the fixing parts 47c and the fixing recesses 86, a centering of the armature 3 takes place on introduction of the fixing ends 81 in the fixing recesses 86.

According to Fig. 32, the armature 3 is locally fixed. The fixing parts 47c and the fixing recesses 86 have a positive connection. The fixing devices 33c ensure a fixing of the armature 3 at two points, which are spaced apart from one another along the longitudinal center axis 13. A front and a rear fixing virtually takes place.

## Claims

1. Pump for conveying a fluid, comprising
a) a pump housing (1),
b) with at least one fluid inlet (26),
c) with at least one pumping chamber (4), which has a flow connection to the at least one fluid inlet (26), and
d) with at least one fluid outlet (25), which has a flow connection to the at least one pumping chamber (4),
e) at least one drivable pump body (2), which
f) at least partially limits the at least one pumping chamber (4),
g) at least one pump body drive mechanism, which has
h) at least one pump body drive mechanism (3) connected to the at least one pump body (2) for driving the at least one pump body (2), wherein the at least one pump body drive mechanism (3) is movable along a displacement path, and
**characterised by**
i) at least one actuatable fixing device (33; 33a; 33b; 33c) for fixing the at least one pump body drive mechanism (3), wherein the at least one fixing device (33; 33a; 33b; 33c)
j) when the pump is in an operating state, is in a release position, wherein in the release position, the at least one pump body drive mechanism is movable along its displacement path, and
k) in a fixing position,
- centers the at least one pump body drive mechanism in the direction of its displacement path, and
- also transversely to its displacement path, and
- further fixes the at least one pump body drive mechanism in the direction of its displacement path, and
- in the direction transverse to its displacement path, l) wherein the at least one pump body (2) may be removed from the at least one pump body drive mechanism with the at least one pump body drive mechanism being maintained in the fixing position by the at least one fixing device (33; 33a; 33b; 33c).

2. Pump for conveying a fluid, comprising
a) a pump housing (1),
b) with at least one fluid inlet (26),
c) with at least one pumping chamber (4), which has a flow connection to the at least one fluid inlet (26), and
d) with at least one fluid outlet (25), which has a flow connection to the at least one pumping chamber (4),
e) at least one drivable pump body (2), which
f) at least partially limits the at least one pumping chamber (4),
g) at least one pump body drive mechanism, which has
h) at least one pump body drive mechanism (3) connected to the at least one pump body (2) for driving the at least one pump body (2), wherein the at least one pump body drive mechanism (3) is movable along a displacement path, and
**characterised by**
i) at least one actuatable fixing device (33; 33a; 33b; 33c) for fixing the at least one pump body drive mechanism (3), wherein the at least one fixing device (33; 33a; 33b; 33c)
j) in a release position, releases the at least one pump body drive mechanism (3), wherein the at least one pump body drive mechanism (3) is then movable along its displacement path, and
k) in a fixing position, fixes the at least one pump body drive mechanism (3) and an exchange of the at least one pump body (2) is possible,
l) can be actuated by at least one actuating device (32; 32a; 32b; 32c) which is actuably mounted on the pump housing (1), and
m) comprises at least one fixing part (47, 87; 47a; 47b; 47c)
- which can be displaced by the at least one actuating device (32; 32a; 32b; 32c) for fixing the at least one pump body drive mechanism (3),
- being movable between the release position and the fixing position, and
- in its fixing position, fixes the at least one pump body drive mechanism (3) at least in the direction of its displacement path, and
n) wherein the at least one pump body drive mechanism (3) is provided with an oscillating movement by magnetic fields along its longitudinal center axis (13).

3. Pump according to claim 1, **characterised in that** the fixing device (33; 33a; 33b; 33c) can be actuated by at least one actuating device (32; 32a; 32b; 32c), which is actuably mounted, preferably pivotably, on the pump housing (1), the at least one actuating device (32; 32a; 32b; 32c) preferably comprising at least one actuating means (36) for the actuation thereof.

4. Pump according to claim 3, **characterised in that** the fixing device (33; 33a; 33b; 33c) comprises at least one fixing part (47, 87; 47a; 47b; 47c) which can be displaced by the actuating device (32; 32a; 32b; 32c) for fixing the pump body drive mechanism (3), the at least one fixing part (47, 87; 47a; 47b; 47c) being movable between the release position and the fixing position.

5. Pump according to claim 1 or 4, **characterised in that** the fixing part (47, 47a; 47b; 47c), in its fixing position, fixes the pump body drive mechanism (3) at least in the direction of its displacement path.

6. Pump according to any one of the preceding claims, **characterised by** at least one actuable centering part (48; 48a; 48b, 73; 48c) for centering the pump body drive mechanism (3), wherein the at least one centering part (48; 48a; 48b, 73; 48c) preferably has at least one centering flank for interaction with the pump body drive mechanism (3).

7. Pump according to claim 6, **characterised in that** the centering part (48; 48a; 48b; 48c) centers the pump body drive mechanism (3) in the direction of its displacement path.

8. Pump according to claim 6 or 7, **characterised in that** the centering part (48; 48a; 73; 48c) centers the pump body drive mechanism (3) transversely to its displacement path.

9. Pump according to any one of claims 6 to 8, **characterised in that** the centering part (48; 48a; 48b, 73; 48c) is connected to the fixing device (33; 33a; 33b; 33c).

10. Pump according to any one of claims 1 to 9, **characterised in that** the fixing device (33a) has at least one wedge mechanism (58), the at least one wedge mechanism (58) having a coupling wedge (59), which can be actuated by the actuating device (32a), and the fixing part (47a), which interacts with the coupling wedge (59) and is configured in a wedge-like manner, at least one spring element (70) also preferably being provided to move the fixing part (47a) into its release position.

11. Pump according to any one of claims 1 to 9, **characterised in that** the fixing device (33b) has at least one encompassing body (47b) to at least partially encompass the pump body drive mechanism (3), the at least one encompassing body (47b) preferably having at least one encompassing receiver (75).

12. Pump according to any one of claims 1 to 11, **characterised in that** the fixing part (47a; 47b; 47c) and the actuating device (32a; 32b; 32c) are coupled to one another by at least one link arrangement, the at least one link arrangement having at least one link pin (71; 71c) and at least one link (54; 54b; 54c) for guiding the at least one link pin (71; 7 1 c).

13. Pump according to claim 12, **characterised in that** the link (54; 54b; 54c) has at least one link pin actuating portion (56; 56b; 56c) for actuating the link pin (71; 71c), the link (54; 54b; 54c) preferably also having a fixing portion (57; 57b) for locally securing the link pin (71; 7 1 c).

14. Pump according to claim 13, **characterised in that** the link pin (71c) forms the fixing part (47c).

15. Pump according to any one of claims 1 to 9, **characterised in that** the actuating device (32) and the fixing device (33) are rigidly connected to one another, the fixing part (47) preferably being configured as a fixing face for resting on the pump body drive mechanism (3).

16. Pump according to claim 15, **characterised in that** the actuating device (32) comprises at least one resilient spring means (50), which, in the fixing position of the fixing part (47), rests on the pump body drive mechanism (3) for holding the actuating device (32) in its fixing position.

## Patentansprüche

1. Pumpe zur Förderung eines Fluids, umfassend
a) ein Pumpen-Gehäuse (1),
b) mit mindestens einem Fluid-Einlass (26),
c) mit mindestens einer Pump-Kammer (4), die mit dem mindestens einen Fluid-Einlass (26) in Strömungs-Verbindung steht, und
d) mit mindestens einem Fluid-Auslass (25), der mit der mindestens einen Pump-Kammer (4) in Strömungs-Verbindung steht,
e) mindestens einen antreibbaren Pump-Körper (2), der
f) die mindestens eine Pump-Kammer (4) zumindest teilweise begrenzt,
g) mindestens eine Pump-Körper-Antriebs-Vorrichtung, die aufweist
h) mindestens eine mit dem mindestens einen Pump-Körper (2) in Verbindung stehende Pump-Körper-Antriebs-Einrichtung (3) zum Antreiben des mindestens einen Pump-Körpers (2), wobei die mindestens eine Pump-Körper-Antriebs-Einrichtung (3) entlang eines Versetzungs-Wegs beweglich ist, und
**gekennzeichnet durch**
i) mindestens eine betätigbare Fixier-Vorrichtung (33; 33a; 33b; 33c) zum Fixieren der mindestens einen Pump-Körper-Antriebs-Einrichtung (3), wobei die mindestens eine Fixier-Vorrichtung (33; 33a; 33b; 33c)
j) sich in einer Freigabe-Position befindet, wenn die Pumpe in einem Betriebs-Zustand ist, wobei die mindestens eine Pump-Körper-Antriebs-Einrichtung in der Freigabe-Position entlang ihres Versetzungs-Wegs beweglich ist, und
k) in einer Fixier-Position
- die mindestens eine Pump-Körper-Antriebs-Einrichtung in Richtung ihres Versetzungs-Wegs und
- ebenfalls quer zu ihrem Versetzungs-Weg zentriert und
- die mindestens eine Pump-Körper-Antriebs-Einrichtung ferner in Richtung ihres Versetzungs-Wegs und
- in Richtung quer zu ihrem Versetzungs-Weg fixiert,
l) wobei der mindestens eine Pump-Körper (2) von der mindestens einen Pump-Körper-Antriebs-Einrichtung weg bewegt werden kann, wobei die mindestens eine Pump-Körper-Antriebs-Einrichtung **durch** die mindestens eine Fixier-Vorrichtung (33; 33a; 33b; 33c) in der Fixier-Position gehalten wird.

2. Pumpe zur Förderung eines Fluids, umfassend
a) ein Pumpen-Gehäuse (1),
b) mit mindestens einem Fluid-Einlass (26),
c) mit mindestens einer Pump-Kammer (4), die mit dem mindestens einen Fluid-Einlass (26) in Strömungs-Verbindung steht, und
d) mit mindestens einem Fluid-Auslass (25), der mit der mindestens einen Pump-Kammer (4) in Strömungs-Verbindung steht,
e) mindestens einen antreibbaren Pump-Körper (2), der
f) die mindestens eine Pump-Kammer (4) zumindest teilweise begrenzt,
g) mindestens eine Pump-Körper-Antriebs-Vorrichtung, die aufweist
h) mindestens eine mit dem mindestens einen Pump-Körper (2) in Verbindung stehende Pump-Körper-Antriebs-Einrichtung (3) zum Antreiben des mindestens einen Pump-Körpers (2), wobei die mindestens eine Pump-Körper-Antriebs-Einrichtung (3) entlang eines Versetzungs-Wegs beweglich ist, und
**gekennzeichnet durch**
i) mindestens eine betätigbare Fixier-Vorrichtung (33; 33a; 33b; 33c) zum Fixieren der mindestens einen Pump-Körper-Antriebs-Einrichtung (3), wobei die mindestens eine Fixier-Vorrichtung (33; 33a; 33b; 33c)
j) in einer Freigabe-Position die mindestens eine Pump-Körper-Antriebs-Einrichtung (3) freigibt, wobei die mindestens eine Pump-Körper-Antriebs-Einrichtung (3) dann entlang ihres Versetzungs-Wegs beweglich ist, und
k) in einer Fixier-Position die zumindest eine Pump-Körper-Antriebs-Einrichtung (3) fixiert, wobei ein Austausch des mindestens einen Pump-Körpers (2) möglich ist,
l) **durch** mindestens eine Betätigungs-Vorrichtung (32; 32a; 32b; 32c) betätigbar ist, die an dem Pumpen-Gehäuse (1) betätigbar gelagert ist und
m) mindestens ein Fixier-Teil (47, 87; 47a; 47b; 47c) umfasst, das
- zur Fixierung der mindestens einen Pump-Körper-Antriebs-Einrichtung (3) **durch** die mindestens eine Betätigungs-Vorrichtung (32; 32a; 32b; 32c) versetzt werden kann,
- zwischen der Freigabe-Position und der Fixier-Position beweglich ist und
- in seiner Fixier-Position die mindestens eine Pump-Körper-Antriebs-Einrichtung (3) mindestens in Richtung ihres Versetzungs-Wegs fixiert, und
n) wobei die mindestens eine Pump-Körper-Antriebs-Einrichtung (3) durch magnetische Felder längs ihrer Längs-Mittel-Achse (13) in eine oszillierende Bewegung versetzt wird.

3. Pumpe gemäß Anspruch 1, **dadurch gekennzeichnet, dass** die Fixier-Vorrichtung (33; 33a; 33b; 33c) durch mindestens eine Betätigungs-Vorrichtung (32; 32a; 32b; 32c) betätigt werden kann, die betätigbar, vorzugsweise schwenkbar, an dem Pumpen-Gehäuse (1) gelagert ist, wobei die mindestens eine Betätigungs-Vorrichtung (32; 32a; 32b, 32c) vorzugsweise mindestens ein Betätigungs-Mittel (36) zur Betätigung desselben umfasst.

4. Pumpe gemäß Anspruch 3, **dadurch gekennzeichnet, dass** die Fixier-Vorrichtung (33; 33a; 33b; 33c) mindestens ein Fixier-Teil (47, 87; 47a; 47b; 47c) umfasst, das durch die Betätigungs-Vorrichtung (32; 32a; 32b; 32c) zur Fixierung der Pump-Körper-Antriebs-Einrichtung (3) versetzt werden kann, wobei das mindestens eine Fixier-Teil (47, 87; 47a; 47b; 47c) zwischen der Freigabe-Position und der Fixier-Position beweglich ist.

5. Pumpe gemäß Anspruch 1 bis 4, **dadurch gekennzeichnet, dass** das Fixier-Teil (47, 87; 47a; 47b; 47c) in seiner Fixier-Position die Pump-Körper-Antriebs-Einrichtung (3) mindestens in Richtung ihres Versetzungs-Wegs fixiert.

6. Pumpe nach einem der vorherigen Ansprüche, **gekennzeichnet durch** mindestens ein betätigbares Zentrier-Teil (48; 48a; 48b, 73; 48c) zum Zentrieren der Pump-Körper-Antriebs-Einrichtung (3), wobei vorzugsweise das mindestens eine Zentrier-Teil (48; 48a; 48b, 73; 48c) mindestens eine Zentrier-Flanke zur Wechselwirkung mit der Pump-Körper-Antriebs-Einrichtung (3) aufweist.

7. Pumpe nach Anspruch 6, **dadurch gekennzeichnet, dass** das Zentrier-Teil (48; 48a; 48b; 48c) die Pump-Körper-Antriebs-Einrichtung (3) in Richtung ihres Versetzungs-Wegs zentriert.

8. Pumpe nach Anspruch 6 oder 7, **dadurch gekennzeichnet, dass** das Zentrier-Teil (48; 48a; 73; 48c) die Pump-Körper-Antriebs-Einrichtung (3) quer zu ihrem Versetzungs-Weg zentriert.

9. Pumpe nach einem der Ansprüche 6 bis 8, **dadurch gekennzeichnet, dass** das Zentrier-Teil (48; 48a; 48b, 73; 48c) mit der Fixier-Vorrichtung (33; 33a; 33b; 33c) in Verbindung steht.

10. Pumpe nach einem der Ansprüche 1 bis 9, **dadurch gekennzeichnet, dass** die Fixier-Vorrichtung (33a) mindestens einen Keil-Mechanismus (58) aufweist, wobei der mindestens eine Keil-Mechanismus (58) einen durch die Betätigungs-Vorrichtung (32a) betätigbaren Kopplungs-Keil (59) und das Fixier-Teil (47a) aufweist, das mit dem Kopplungs-Keil (59) in Wechselwirkung steht und keilartig ausgebildet ist, wobei vorzugsweise ferner mindestens ein Feder-Element (70) zum Bewegen des Fixier-Teils (47a) in seine Freigabe-Position vorgesehen ist.

11. Pumpe nach einem der Ansprüche 1 bis 9, **dadurch gekennzeichnet, dass** die Fixier-Vorrichtung (33b) mindestens einen Umgreif-Körper (47b) zum mindestens teilweisen Umgreifen der Pump-Körper-Antriebs-Einrichtung (3) aufweist, wobei vorzugsweise der mindestens eine Umgreif-Körper (47b) mindestens eine Umgreif-Aufnahme (75) aufweist.

12. Pumpe nach einem der Ansprüche 1 bis 11, **dadurch gekennzeichnet, dass** das Fixier-Teil (47a; 47b; 47c) und die Betätigungs-Vorrichtung (32a; 32b; 32c) über mindestens eine Kulissen-Anordnung aneinander gekoppelt sind, wobei die mindestens eine Kulissen-Anordnung mindestens einen Kulissen-Stift (71; 71c) und mindestens eine Kulisse (54; 54b; 54c) zur Führung des mindestens einen Kulissen-Stifts (71; 71c) aufweist.

13. Pumpe nach Anspruch 12, **dadurch gekennzeichnet, dass** die Kulisse (54; 54b; 54c) mindestens einen Kulissen-Stift-Betätigungs-Abschnitt (56; 56b; 56c) zum Betätigen des Kulissen-Stifts (71; 71c) aufweist, wobei vorzugsweise die Kulisse (54; 54b; 54c) ferner einen Fixier-Abschnitt (57; 57b) zum örtlichen Festlegen des Kulissen-Stifts (71; 71 c) aufweist.

14. Pumpe nach Anspruch 13, **dadurch gekennzeichnet, dass** der Kulissen-Stift (71c) das Fixier-Teil (47c) bildet.

15. Pumpe nach einem der Ansprüche 1 bis 9, **dadurch gekennzeichnet, dass** die Betätigungs-Vorrichtung (32) und die Fixier-Vorrichtung (33) fest miteinander verbunden sind, wobei vorzugsweise das Fixier-Teil (47) als Fixier-Fläche zur Anlage an der Pump-Körper-Antriebs-Einrichtung (3) ausgebildet ist.

16. Pumpe nach Anspruch 15, **dadurch gekennzeichnet, dass** die Betätigungs-Vorrichtung (32) mindestens ein federnd ausgebildetes FederMittel (50) umfasst, das in der Fixier-Position des Fixier-Teils (47) an der Pump-Körper-Antriebs-Einrichtung (3) zum Halten der Betätigungs-Vorrichtung (32) in ihrer Fixier-Position anliegt.

## Revendications

1. Pompe pour le transport d'un fluide, comprenant
a) un boîtier de pompe (1),
b) avec au moins une entrée de fluide (26),
c) avec au moins une chambre de pompage (4), qui est en communication fluidique avec l'au moins une entrée de fluide (26), et
d) avec au moins une sortie de fluide (25), qui est en communication fluidique avec l'au moins une chambre de pompage (4),
e) au moins un corps de pompe (2) pouvant être entraîné, qui
f) au moins limite partiellement l'au moins une chambre de pompage (4),
g) au moins un mécanisme d'entraînement de corps de pompe, qui présente
h) au moins un mécanisme d'entraînement de corps de pompe (3) connecté à l'au moins un corps de pompe (2) pour entraîner l'au moins un corps de pompe (2), dans lequel l'au moins un mécanisme d'entraînement de corps de pompe (3) est mobile le long d'un chemin de déplacement, et **caractérisé par**
i) au moins un dispositif de fixation actionnable (33 ; 33a ; 33b ; 33c) pour fixer l'au moins un mécanisme d'entraînement de corps de pompe (3), où l'au moins un dispositif de fixation (33 ; 33a ; 33b ; 33c)
j) lorsque la pompe est dans un état de fonctionnement, est dans une position de libération, où dans la position de libération, l'au moins un mécanisme d'entraînement de corps de pompe est mobile le long de son chemin de déplacement, et
k) dans une position de fixation,
centre l'au moins un mécanisme d'entraînement de corps de pompe dans la direction de son chemin de déplacement, et
également transversalement par rapport à son chemin de déplacement, et
fixe en outre l'au moins un mécanisme d'entraînement de corps de pompe dans la direction de son chemin de déplacement, et
dans la direction transversale par rapport à son chemin de déplacement,
l) dans lequel l'au moins un corps de pompe (2) peut être retiré de l'au moins un mécanisme d'entraînement de corps de pompe avec l'au moins un mécanisme d'entraînement de corps de pompe est maintenu dans la position de fixation par l'au moins un dispositif de fixation (33 ; 33a ; 33b ; 33c).

2. Pompe pour le transport d'un fluide, comprenant
a) un boîtier de pompe (1),
b) avec au moins une entrée de fluide (26),
c) avec au moins une chambre de pompage (4), qui est en communication fluidique avec l'au moins une entrée de fluide (26), et
d) avec au moins une sortie de fluide (25), qui est en communication fluidique avec l'au moins une chambre de pompage (4),
e) au moins un corps de pompe (2) pouvant être entraîné, qui
f) au moins limite partiellement l'au moins une chambre de pompage (4),
g) au moins un mécanisme d'entraînement de corps de pompe, qui présente
h) au moins un mécanisme d'entraînement de corps de pompe (3) relié à l'au moins un corps de pompe (2) pour entraîner l'au moins un corps de pompe (2), où l'au moins un mécanisme d'entraînement de corps de pompe (3) est mobile le long d'un chemin de déplacement, et
**caractérisé par**
i) au moins un dispositif de fixation actionnable (33 ; 33a ; 33b ; 33c) pour fixer l'au moins un mécanisme d'entraînement de corps de pompe (3), où l'au moins un dispositif de fixation (33 ; 33a ; 33b ; 33c)
j) dans une position de libération, libère l'au moins un mécanisme d'entraînement de corps de pompe (3), où l'au moins un mécanisme d'entraînement de corps de pompe (3) est ensuite mobile le long de son chemin de déplacement, et
k) dans une position de fixation, fixe l'au moins un mécanisme d'entraînement de corps de pompe (3) et un changement de l'au moins un corps de pompe (2) est possible,
l) peut être actionné par au moins un dispositif d'actionnement (32 ; 32a ; 32b ; 32c) qui est monté de façon à pouvoir être actionné sur le boîtier de pompe (1), et
m) comprend au moins une partie de fixation (47, 87 ; 47a ; 47b ; 47c)
qui peut être déplacé par l'au moins un dispositif d'actionnement (32 ; 32a ; 32b ; 32c) pour fixer l'au moins un mécanisme d'entraînement de corps de pompe (3),
étant mobile entre la position de libération et la position de fixation, et
dans sa position de fixation, fixe l'au moins un mécanisme d'entraînement de corps de pompe (3) au moins dans la direction de son chemin de déplacement, et
n) dans lequel l'au moins un mécanisme d'entraînement de corps de pompe (3) est doté d'un mouvement oscillant par des champs magnétiques le long de son axe central longitudinal (13).

3. Pompe selon la revendication 1, **caractérisée en ce que** le dispositif de fixation (33 ; 33a ; 33b ; 33c) peut être actionné par au moins un dispositif d'actionnement (32 ; 32a ; 32b ; 32c), qui est monté de façon à pouvoir être actionné, de préférence en pivotement, sur le boîtier de pompe (1), l'au moins un dispositif d'actionnement (32 ; 32a ; 32b ; 32c) comprenant de préférence au moins un moyen d'actionnement (36) permettant son actionnement.

4. Pompe selon la revendication 3, **caractérisée en ce que** le dispositif de fixation (33 ; 33a ; 33b ; 33c) comprend au moins une partie de fixation (47, 87 ; 47a, 47b ; 47c) qui peut être déplacée par le dispositif d'actionnement (32 ; 32a ; 32b ; 32c) pour fixer le mécanisme d'entraînement de corps de pompe (3), l'au moins une partie de fixation (47, 87 ; 47 ; 47b ; 47c) étant mobile entre la position de libération et la position de fixation.

5. Pompe selon la revendication 1 ou 4, **caractérisée en ce que** la partie de fixation (47, 47a ; 47b ; 47c), dans sa position de fixation, fixe le mécanisme d'entraînement de corps de pompe (3) au moins dans la direction de son chemin de déplacement.

6. Pompe selon l'une quelconque des revendications précédentes, **caractérisée par**
au moins une partie de centrage (48 ; 48a ; 48b, 73 ; 48c) pouvant être actionnée pour centrer le mécanisme d'entraînement de corps de pompe (3), où l'au moins une partie de centrage (48 ; 48a ; 48b, 73 ; 48c) présente de préférence au moins un flanc de centrage pour une coopération avec le mécanisme d'entraînement de corps de pompe (3).

7. Pompe selon la revendication 6, **caractérisée en ce que** la partie de centrage (48 ; 48a ; 48b ; 48c) centre le mécanisme d'entraînement de corps de pompe (3) dans la direction de son chemin de déplacement.

8. Pompe selon la revendication 6 ou 7, **caractérisée en ce que** la partie de centrage (48 ; 48a ; 73 ; 48c) centre le mécanisme d'entraînement de corps de pompe (3) transversalement par rapport à son chemin de déplacement.

9. Pompe selon l'une quelconque des revendications 6 à 8, **caractérisée en ce que** la partie de centrage (48 ; 48a ; 48b, 73 ; 48c) est reliée au dispositif de fixation (33 ; 33a ; 33b ; 33c).

10. Pompe selon l'une quelconque des revendications 1 à 9, **caractérisée en ce que** le dispositif de fixation (33a) présente au moins un mécanisme à cale (58), l'au moins un mécanisme à cale (58) ayant une cale de couplage (59), qui peut être actionnée par le dispositif d'actionnement (32a), et la partie de fixation (47a), qui coopère avec la cale de couplage (59) et est configurée à la manière d'une cale, au moins un élément de ressort (70) également de préférence étant prévu pour déplacer la partie de fixation (47a) dans sa position de libération.

11. Pompe selon l'une quelconque des revendications 1 à 9, **caractérisée en ce que** le dispositif de fixation (33b) présente au moins un corps enveloppant (47b) pour envelopper au moins partiellement le mécanisme d'entraînement de corps de pompe (3), l'au moins un corps enveloppant (47b) ayant de préférence au moins un récepteur enveloppant (75).

12. Pompe selon l'une quelconque des revendications 1 à 11, **caractérisée en ce que** la partie de fixation (47a ; 47b ; 47c) et le dispositif d'actionnement (32a ; 32b ; 32c) sont couplés l'un(e) à l'autre par au moins un agencement de liaison, l'au moins un agencement de liaison ayant au moins une broche de liaison (71 ; 71C) et au moins une liaison (54 ; 54b ; 54c) pour guider l'au moins une broche de liaison (71 ; 71c).

13. Pompe selon la revendication 12, **caractérisée en ce que** la liaison (54 ; 54b ; 54c) présente au moins une partie d'actionnement (56 ; 56b ; 56c) de broche de liaison pour actionner la broche de liaison (71 ; 71c), la liaison (54 ; 54b ; 54c) ayant de préférence également une partie de fixation (57 ; 57b) pour fixer localement la broche de liaison (71 ; 71c).

14. Pompe selon la revendication 13, **caractérisée en ce que** la broche de liaison (71c) forme la partie de fixation (47c).

15. Pompe selon l'une quelconque des revendications 1 à 9, **caractérisée en ce que** le dispositif d'actionnement (32) et le dispositif de fixation (33) sont rigidement reliés l'un à l'autre, la partie de fixation (47) étant de préférence configurée en tant que face de fixation pour reposer sur le mécanisme d'entraînement de corps de pompe (3).

16. Pompe selon la revendication 15, **caractérisée en ce que** le dispositif d'actionnement (32) comprend au moins un moyen de ressort élastique (50), qui, dans la position de fixation de la partie de fixation (47), repose sur le mécanisme d'entraînement de corps de pompe (3) pour maintenir le dispositif d'actionnement (32) dans sa position de fixation.
